# EUROPÄISCHE PATENTSCHRIFT

(11) **EP 2 750 823 B1**
(45) Veröffentlichungstag und Bekanntmachung des Hinweises auf die Patenterteilung: **12.07.2017**
(21) Anmeldenummer: 12753486.5
(22) Anmeldetag: 31.08.2012
(51) Int. Cl.: B23K 9/028, B23K 9/16, B23K 37/053, B23K 9/32

(54) **FORMIERKÖRPER ZUM ABDICHTEN EINES ZU SCHWEISSENDEN GEGENSTANDES, INSBESONDERE EINES ROHRES, DER EINE WASSERLÖSICHKEIT GRÖSSER ODER GLEICH 90 % AUFWEIST**
FORMING BODY FOR SEALING AN OBJECT TO BE WELDED, MORE PARTICULARLY A PIPE, HAVING A WATER SOLUBILITY GREATER THAN OR EQUAL TO 90%
CORPS POUVANT PRENDRE UNE FORME, DESTINÉ À FAIRE L'ÉTANCHÉITÉ D'UN OBJET À SOUDER, NOTAMMENT D'UN TUBE, ET PRÉSENTANT UNE SOLUBILITÉ DANS L'EAU SUPÉRIEURE OU ÉGALE À 90 %

(30) Priorität: 31.08.2011 DE 102011053171
(43) Veröffentlichungstag der Anmeldung: 09.07.2014
(73) Patentinhaber: Mitsubishi Hitachi Power Systems Europe GmbH, 47059 Duisburg (DE)
(72) Erfinder: BUSCHMANN, Michael, 46539 Dinslaken (DE)
(74) Vertreter: Viering, Jentschura & Partner mbB Patent- und Rechtsanwälte
(86) Internationale Anmeldenummer: PCT/EP2012/067015
(87) Internationale Veröffentlichungsnummer: WO 2013/030364

(56) Entgegenhaltungen:
- JP-A- 62 270 281
- JP-A- 2002 205 192
- JP-A- 2004 105 994
- US-A- 6 083 456
- US-A1- 2009 166 338
- US-B1- 6 251 431

## Beschreibung

Die Erfindung richtet sich auf die Verwendung eines aus einem formstabilen, biologisch abbaubaren Material bestehenden Formkörpers als Formierkörper bei einem Rohrschweißverfahren, siehe Anspruch 1.

JP2002/205192 A, das als nächstliegender Stand der Technik angesehen wird, offenbart die Verwendung eines formstabilen abbaubaren Formkörpers als Formierkörper bei einem Rohrschweißverfahren, wobei das Material als Wasser lösbares gewählt ist. Ist es beispielsweise notwendig, einen Gegenstand, wie ein Rohr einer Membranwandverrohrung, aufgrund von Wartungsarbeiten zu schweißen, ist es üblich, zur Abdichtung der Schweißstelle einen Formierkörper in Form eines Formierpapiers in das zu verschweißende Rohr einzubringen, um in dem zu verschweißenden Rohr eine Gassperre für das als Schutzgas verwendete Argon aufzubauen. Vor dem Einbringen des Formierpapiers in den Innenraum des Rohres wird das Formierpapier zusammengedrückt bzw. zusammengeknüllt, so dass es in einer kompakteren Form in das Rohr eingebracht werden kann. Dieses Formierpapier ist bei Verwendung in geringen Mengen wasserlöslich, so dass es sich bei Wiederinbetriebnahme des Rohrsystems bei Kontakt mit einer Flüssigkeit, insbesondere Wasser, auflösen kann. Es tritt jedoch häufig auf, dass eine zu große Menge und zu große Stücke an Formierpapier zum Schweißen in die Rohre eingeführt werden, wodurch zwar die Abdichtung beim Schweißen verbessert ist, sich diese jedoch nach dem Schweißen aufgrund ihrer Größe nicht mehr so leicht bei Kontakt mit einer Flüssigkeit und einem Umwälzen innerhalb der Rohre auflösen können, wodurch Verstopfungen in dem jeweiligen Rohr entstehen können, was wiederum zu Rissen in dem Rohr führen kann. Um die Verstopfungen zu entfernen, ist es üblich, die Einzelrohre jeweils zu zerschneiden, aufzudrücken, mittels einer Einzelrohrabdrückung zu spülen und anschließend zu verschweißen und durch Röntgen der Schweißnaht die Qualität der Schweißnaht zu prüfen. Dies führt jedoch zu hohen Kosten und erfordert einen hohen Zeit- und Arbeitsaufwand.

Der Erfindung liegt daher die Aufgabe zugrunde, eine Lösung zu schaffen, mittels welcher eine sichere Abdichtung eines Gegenstandes, insbesondere eines Rohres, während eines Schweißens sichergestellt werden kann und mittels welcher durch einen Formierkörper verursachte Verstopfungen in dem geschweißten Gegenstand vermieden werden können.

Eine Verwendung eines aus einem formstabilen, biologisch abbaubaren Material bestehenden Formkörpers als Formierkörper bei einem Rohrschweißverfahren gemäß der Erfindung ist in dem Anspruch 1 definiert.

Zweckmäßige Ausgestaltungen und vorteilhafte Weiterbildungen der Erfindung sind Gegenstand des jeweiligen Unteranspruchs.

Erfindungsgemäß findet ein Formierkörper, der aus einem formstabilen, vorzugsweise biologisch abbaubaren, Material besteht, welches eine Wasserlöslichkeit ≥ 90 % aufweist und dessen Hauptbestandteil Maisstärke und/oder Maisgries und/oder Maisflocken ist/sind, Verwendung.

Weiterhin findet der Formierkörper bei einem Rohrschweißverfahren Verwendung, bei dem der Formierkörper in einen Innenraum eines Stahlrohres eingebracht und der Innenraum des Stahlrohres mit dem eingebrachten Formierkörper abgedichtet wird, das mit dem Formierkörper abgedichtete Stahlrohr unter Schutzgas, insbesondere Argon, geschweißt wird, nach dem Schweißen eine Flüssigkeit, insbesondere Wasser, in den Innenraum des Gegenstandes eingeleitet und der Formierkörper in dem Innenraum des Rohres mit der Flüssigkeit in Kontakt gebracht wird, wobei der Formierkörper durch den Kontakt mit der Flüssigkeit aufgelöst wird.

Bei einer erfindungsgemäßen Verwendung eines Formierkörpers unterscheidet sich der verwendete Formierkörper von einem aus einem Formierpapier hergestellten Formierkörper unter anderem dadurch, dass dieser nunmehr formstabil ist, was bedeutet, dass er insbesondere druckstabil und temperaturstabil ist, d. h. dass sich seine Form bei Aufbringen eines Druckes und/oder einer erhöhten Temperatur nicht verändert. Der erfindungsgemäß verwendete Formierkörper weist somit bereits in seinem Ausgangszustand die Form auf, mit welcher er in den Innenraum des zu schweißenden Gegenstandes als Abdichtung eingeführt wird. Eine vorherige Veränderung der Form, wie dies bei Formierpapier der Fall ist, ist somit bei dem erfindungsgemäß verwendeten Formierkörper nicht vorgesehen und nicht mehr notwendig. Dadurch kann die Vorbereitungszeit eines zu schweißenden Gegenstandes reduziert werden. In seinem Ausgangszustand, d. h. in seinem Zustand unmittelbar nach seiner Herstellung, weist der Formierkörper unmittelbar eine bereits an den Innenraum des zu schweißenden Gegenstandes angepasste Form auf, so dass eine sichere Abdichtung des Gegenstandes während des Schweißens gewährleistet werden kann. Dadurch, dass der erfindungsgemäß verwendete Formierkörper bereits in seinem Ausgangszustand die Form und Größe aufweist, in welcher er auch in den Innenraum des Gegenstandes eingebracht wird, kann verhindert werden, dass eine zu große Menge bzw. ein zu groß ausgebildeter Formierkörper in den Innenraum des Gegenstandes eingebracht wird. Durch die sehr gute Wasserlöslichkeit des erfindungsgemäß verwendeten Formierkörpers von ≥ 90 %, vorzugsweise von 100 %, kann sich bei Zugabe einer Flüssigkeit, insbesondere Wasser, in den Gegenstand, nachdem er geschweißt wurde, der Formierkörper ohne oder mit nur sehr geringen Rückständen auflösen und aus dem Innenraum des Gegenstandes ausgespült werden. Verstopfungen des Innenraumes des Gegenstandes durch den Formierkörper können dadurch vollständig verhindert werden. Das Auflösen des Formierkörpers durch Kontakt mit der Flüssigkeit kann zudem besonders schnell erfolgen, so dass der Innenraum des Gegenstandes sehr schnell wieder frei ist und in Betrieb genommen werden kann.

Hierzu ist es erfindungsgemäß zudem vorgesehen, dass das Material des Formierkörpers ein Maismaterial, insbesondere Maisstärke, Maisflocken und/oder Maisgrieß, umfasst. Gemischt wird das Maismaterial zur Herstellung des Formierkörpers vorzugsweise mit Wasser. Das Maismaterial ist vorzugsweise der Hauptbestandteil des Formierkörpers bzw. des Materials des Formierkörpers. Der aus einem Maismaterial ausgebildete Formierkörper zeichnet sich durch eine besonders gute Wasserlöslichkeit auf, wobei sich der Formierkörper vorzugsweise rückstandslos bei einem Kontakt mit einer Flüssigkeit, insbesondere Wasser, unabhängig von der Größe des Formierkörpers auflösen kann. Zudem ist der Formierkörper durch die Herstellung aus einem Maismaterial vorzugsweise vollständig biologisch abbaubar und aus einem nachwachsenden Rohstoff hergestellt.

Nach einer bevorzugten Ausgestaltung der Erfindung ist der Formierkörper zumindest im Wesentlichen kugelförmig oder zylinderförmig ausgebildet. Durch die kugelförmige oder zylinderförmige Ausgestaltung ist der Formierkörper möglichst passgenau an die Innenfläche des Innenraumes des zu schweißenden Gegenstandes angepasst, so dass der Formierkörper an der Innenwand des Innenraumes des Gegenstandes flächig anliegen kann, wodurch eine sichere Abdichtung des Innenraumes des Gegenstandes mittels des Formierkörpers während des Schweißens des Gegenstandes gewährleistet werden kann. Soll aber beispielsweise ein Profil mit einem rechteckförmigen Querschnitt geschweißt werden, ist es ebenfalls möglich, dass der Formierkörper in seinem Ausgangszustand keinen kreisrunden Querschnitt, sondern einen rechteckförmigen Querschnitt aufweist. Es ist auch möglich, dass der Formierkörper in seinem Ausgangszustand andere Formen aufweist, wobei hierbei lediglich wesentlich ist, dass der Formierkörper in seinem Ausgangszustand mit seiner Außenumfangsfläche an die Innenumfangsfläche des abzudichtenden Gegenstandes derart angepasst ist, dass der Formierkörper mit seiner Außenumfangsfläche flächig an der Innenumfangsfläche des abzudichtenden Gegenstandes, wie beispielweise einem Rohr oder einem Profil, anliegt und der Austritt von Gas verhindert werden kann.

Um das Einführen des Formierkörpers in den Innenraum des zu schweißenden Gegenstandes zu erleichtern, ist es vorteilhaftweise vorgesehen, dass der Formierkörper einen Kantenbereich mit Fase aufweist. Hierbei ist diese Fase in dem Übergangsbereich bzw. dem Kantenbereich zwischen einer Stirnseitenfläche und einer Längsseitenfläche des Formierkörpers ausgebildet.

Ferner ist es möglich, dass der Formierkörper mittels eines Einführwerkzeuges in den Innenraum des Gegenstandes eingebracht wird. Mit dem Einführwerkzeug kann der Formierkörper an der gewünschten Stelle innerhalb des Gegenstandes positioniert werden. Das Einführwerkzeug ist in Form eines länglichen, zylinderförmigen Stempels ausgebildet, so dass der Formierkörper mit dem Einführwerkzeug in den Innenraum des Gegenstandes eindrückbar ist. Um zu verhindern, dass das Einführwerkzeug zu weit in den Innenraum des Gegenstandes eingeführt wird und damit auch der Formierkörper zu weit in den Innenraum des Gegenstandes eingeführt wird, kann an der Außenumfangsfläche des Einführwerkzeuges eine Auswölbung, vorzugsweise eine ringförmige Auswölbung, ausgebildet sein, welche einen größeren Außenumfang bzw. Durchmesser aufweist als der Innenumfang bzw. der Innendurchmesser des Innenraumes des zu schweißenden Gegenstandes.

Insbesondere findet der Formierkörper bei der Verschweißung von Stahlrohren und hierbei bevorzugt bei der Verschweißung einer Membran(rohr)wand eines Dampfkessels eines Kraftwerkes Verwendung. Das erfindungsgemäße Verfahren zeichnet sich daher in Ausgestaltung dadurch aus, dass ein Stahlrohr geschweißt oder verschweißt wird, wobei gemäß weiterer Ausgestaltung insbesondere vorgesehen ist, dass eine Membranwand eines Dampfkessels eines Kraftwerks geschweißt oder verschweißt wird.

Nachfolgend wird die Erfindung unter Bezugnahme auf die anliegenden Zeichnungen anhand eines bevorzugten Ausführungsbeispieles näher erläutert.

Es zeigen:
- Fig. 1: eine schematische Darstellung eines Formierkörpers beim Einführen in einen zu schweißenden Gegenstand mittels eines Einführwerkzeuges, und
- Fig. 2: eine schematische Darstellung des zu schweißenden Gegenstandes in einer Schnittanshicht entlang seiner Längsachse mit zwei in dem zu schweißenden Gegenstand angeordneten Formierkörpern.

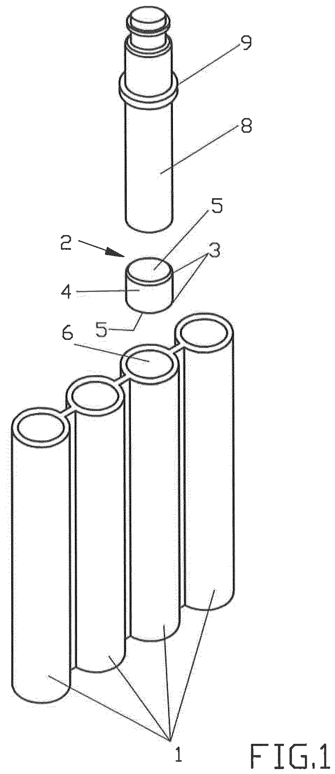

Bei dem hier gezeigten Beispiel ist der zu schweißende Gegenstand ein Rohr. In Fig. 1 ist eine Rohranordnung bestehend aus vier miteinander verbundenen Rohren 1 gezeigt.

Ferner ist in Fig. 1 ein Formierkörper 2 gezeigt, während er in einen Innenraum 6 eines der vier Rohre 1 eingeführt wird. Der Formierkörper 2 ist aus einem formstabilen, kompakten Material ausgebildet, welches eine Wasserlöslichkeit ≥ 90 % aufweist. Das Material des Formierkörpers 2 weist dafür vorzugsweise als Hauptstandteil ein Maismaterial, insbesondere Maisstärke, Maisflocken und/oder Maisgrieß, auf.

Der Formierkörper 2 erhält bereits bei seiner Herstellung die Form, mit welcher er zum Abdichten des Rohres 1 in das Rohr 1 eingeführt wird. Bei der hier gezeigten Ausführungsform ist der Formierkörper 2 zylinderförmig ausgebildet, wobei die beiden Kantenbereiche 3 des Formierkörpers 2 zwischen der Längsseitenfläche 4 des Formierkörpers 2 und den beiden Stirnseitenflächen 5 des Formierkörpers 2 eine Fase aufweisen, so dass die Kantenbereiche 3 abgeschrägt ausgebildet sind. Hierdurch wird das Einführen des Formierkörpers 2 in das zu schweißende Rohr erleichtert.

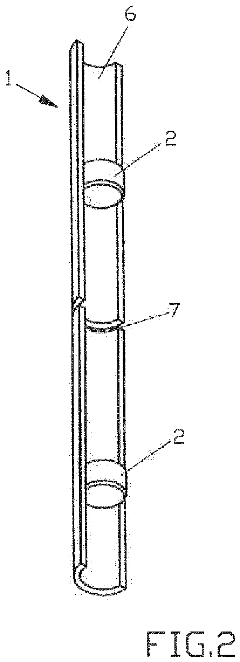

Vor dem Schweißen eines Rohres 1 wird der Formierkörper 2 in den Innenraum 6 des Rohres 1 eingeführt, so dass der Innenraum 6 durch den Formierkörper 2 abgedichtet wird, wobei der Formierkörper 2 als Gassperre dient, wobei insbesondere verhindert werden soll, dass das beim Schweißen verwendete Schutzgas Argon aus dem Innenraum 6 des zu schweißenden Rohres 1 seitlich ausströmen kann. Wie in Fig. 2 gezeigt ist, wird vor und hinter einer zu schweißenden Stelle 7 jeweils ein Formierkörper 2 angeordnet. Nach dem Schweißen des Rohres 1 wird als Flüssigkeit Wasser in den Innenraum 6 des Rohres 1 eingeleitet, wobei sich der Formierkörper 2, sobald er mit dem Wasser in Kontakt kommt, in kurzer Zeit rückstandslos auflöst.

Um das Einführen des Formierkörpers 2 in den Innenraum 6 des Rohres 1 zu erleichtern, wird ein Einführwerkzeug 8 verwendet, welches in Form eines länglichen, zylinderförmigen Stempels ausgebildet ist. Die Außenumfangsfläche des Einführwerkzeuges 8 ist hierfür kleiner als die Innenumfangsfläche des Innenraumes 6 des Rohres 1, so dass das Einführwerkzeug 8 zumindest teilweise in den Innenraum 6 des Rohres 1 eintauchen kann. Mit dem Einführwerkzeug 8 kann der Formierkörper 2, indem das Einführwerkzeug 8 auf eine Stirnseitenfläche 5 des Formierkörpers 2 drückt und dadurch den Formierkörper in den Innenraum 6 des Rohres 1 einschiebt, an der gewünschten Stelle innerhalb des Rohres 1 positioniert werden. Um zu verhindern, dass das Einführwerkzeug 8 zu weit in das Rohr 1 eingeführt wird und damit auch der Formierkörper 2 zu weit in das Rohr 1 eingeführt wird, ist an der Außenumfangsfläche des Einführwerkzeuges 8 eine ringförmige Auswölbung 9 ausgebildet, welche einen größeren Außenumfang bzw. Durchmesser aufweist als der Innenumfang bzw. der Innendurchmesser des Innenraumes 6 des zu schweißenden Rohres 1.

Der Formierkörper besteht zumindest in seinen Hauptbestandteilen, vorzugsweise aber vollständig, aus Maisstärke, Maisgries oder Maisflocken oder Mischungen aus diesen Bestandteilen. Insbesondere besteht er aus einem Material, das ausschließlich aus Kohlenwasserstoff besteht, so dass er als reiner Kohlenwasserstoffkörper ausgebildet ist, und insbesondere kein Natrium enthält. Der Formierkörper besteht aus einem Material, das bei einer Veraschung nach DIN 51719 einen Aschegehalt von 0,29 % ergibt. Ebenso ist der Formierkörper aus einem Material hergestellt, das bei seiner Auflösung in voll entsalztem Wasser einen pH-Wert von 6,6 ergibt. Schließlich ist der Formierkörper derart aus einem Material, Maisstärke oder einer Mischung derselben mit Maisgrieß und/oder Maisflocken, hergestellt, dass er sich in einem Wasserbad oder einer Wasserlösung so weit auflöst, dass sich bei einer Abfiltrierung mit üblichem, in chemischen Laboratorien verwendetem Filterpapier ein abfiltrierbarer Rückstand von 7,6 % bildet. In diesem Sinne beträgt die Wasserlöslichkeit somit insbesondere 92,4 %.

## Patentansprüche

1. Verwendung eines aus einem formstabilen, biologisch abbaubaren Material bestehenden Formkörpers als Formierkörper (2) bei einem Rohrschweißverfahren, bei welchem der Formierkörper (2) zum temporären innenseitigen Abdichten eines Strömungsquerschnittes eines zu schweißenden Stahlohres (1) als den Strömungsquerschnitt des Stahlrohres (1) während des Schweißens abdichtende Gassperre in den Innenraum (6) des Stahlrohres (1) eingeführt und das mit dem eingeführten Formierkörper (2) im Innenraum (6) abgedichtete Stahlrohr (1) unter Schutzgas geschweißt wird, nach dem Schweißen eine Flüssigkeit in den Innenraum (6) des Rohres (1) eingeleitet und der Formierkörper (2) in dem Innenraum (6) des Rohres (1) mit der Flüssigkeit in Kontakt gebracht und der Formierkörper (2) durch den Kontakt mit der Flüssigkeit aufgelöst wird,
wobei der Formierkörper (2) aus einem biologischen abbaubaren Material besteht, dessen Hauptbestandteile Maisstärke und/oder Maisgries und/oder Maisflocken sind und das eine Wasserlöslichkeit ≥ 90% aufweist und bei Auflösung in voll entsalztem Wasser einen pH-Wert von 6,6 ergibt,
und wobei der Formierkörper (2) bereits in seinem unmittelbaren Ausgangszustand zylinderförmig mit einer an den Innenraum (6) des Stahlrohrs (1) angepassten und ein sicheres Abdichten des Innenraums (6) während des Schweißens gewährleistenden Form und Größe hergestellt ist und im Übergangsbereich zwischen einer Stirnseitenfläche und einer Längsseitenfläche einen Kantenbereich mit Fase aufweist sowie derart formstabil, druckstabil und temperaturstabil ist, dass sich seine Form bei Aufbringung eines Drucks und einer erhöhten Temperatur nicht ändert und er mittels eines länglichen, zylinderförmigen, stempelförmigen Einführwerkzeugs (8), das auf eine Stirnseitenfläche (5) des Formierkörpers (2) drückt, in den Innenraum (6) des Rohres (1) eindrückbar und an der gewünschten Stelle positionierbar ist, wobei er mit seiner Außenumfangsfläche flächig an der Innenumfangsfläche des Stahlrohres (1) anliegt.

2. Verwendung nach Anspruch 1, **dadurch gekennzeichnet, dass** der Formierkörper zur Verschweißung der Membranwand eines Dampfkessels eines Kraftwerks verwendet wird.

## Claims

1. Use of a moulded body consisting of a dimensionally stable, biologically degradable material, as a forming body (2) with a pipe welding method, with which the forming body (2) is inserted as a gas lock into the interior (6) of the steel pipe (1) for a temporary internal sealing of a flow area of a steel pipe (1) to be welded, sealing the flow area of the steel pipe (1) during said welding, and which is welded under shield gas with the inserted forming body (2) in the interior (6) of the sealed steel pipe (1), whilst a fluid is introduced into the interior (6) of the pipe (1) after welding and the forming body (2) brought into contact with the fluid in the interior (6) of the pipe (1) and the forming body (2) dissolved through contact with the fluid,
wherein the forming body (2) consists of a biologically degradable material, the main components of which are maize starch and/or maize grit and/or maize flakes, and which has a water solubility of ≥ 90%
and upon dissolving
in fully desalinated water results in a pH value of 6.6,
and wherein the forming body (2) has already been produced cylinder-shaped in its direct starting condition with a shape and size, guaranteeing adaptation to the interior (6) of the steel pipe (1) and safe sealing of the interior (6) during welding, and comprises an edge area with a chamfer in the transition area between a facing side surface and a longitudinal side surface and is dimensionally stable, pressure stable and temperature stable in such a way that its shape does not change when a pressure and an increased temperature are applied, and can be pressed into the interior (6) of the pipe (1) by means of an elongated, cylinder-shaped, stamp-shaped insertion tool (8) that presses upon a facing side surface (5) of the forming body (2), and can be positioned in the desired location, wherein it lies spatially against the inner circumference surface of the steel pipe (1) with its outer circumference surface.

2. Use according to claim 1, **characterised in that** the forming body is used for welding the membrane wall of a steam boiler of a power station.

## Revendications

1. Utilisation d'un corps moulé constitué d'un matériau rigide biodégradable en tant que corps de formage (2) dans un procédé de soudure de tubes, dans lequel le corps de formage (2) est introduit, pour l'étanchéité interne d'une section d'écoulement d'un tube en acier (1) à souder et en tant que barrière à gaz étanchéifiant la section d'écoulement du tube en acier (1) pendant la soudure, dans l'espace interne (6) du tube en acier (1) et qui est soudé avec le corps de formage (2) introduit dans le tube en acier (1) étanchéifié dans l'espace interne (6), sous gaz de protection, après la soudure, un liquide est introduit dans l'espace interne (6) du tube (1) et le corps de formage (2) est mis en contact dans l'espace interne (6) du tube (1) avec le liquide et le corps de formage (2) est dissout par le contact avec le liquide,
le corps de formage (2) étant constitué d'un matériau biodégradable dont les composants principaux sont l'amidon de maïs et/ou la semoule de maïs et/ou des flocons de maïs et qui présente une solubilité dans l'eau ≥ 90 % et, lors de la dissolution dans de l'eau entièrement désalinisée, une valeur de pH de 6,6 en résulte,
et le corps de formage (2) étant fabriqué, dès son état initial, sous une forme cylindrique, avec une forme et une taille adaptées à l'espace interne (6) du tube en acier (1) et garantissant une étanchéité sûre de l'espace interne (6) pendant la soudure et comprenant, dans la zone de transition entre une surface frontale et une surface longitudinale, une zone d'arête avec un chanfrein et étant rigide, résistante à la pression et à la température de sorte que sa forme ne change pas lors de l'application d'une pression et d'une température élevée et pouvant être comprimé, à l'aide d'un outil d'introduction (8) allongé, cylindrique, en forme de poinçon, qui appuie sur une surface frontale (5) du corps de formage (2), dans l'espace interne (6) du tube (1) et pouvant être positionnée à l'endroit souhaité, moyennant quoi il repose, avec sa circonférence externe, sur toute sa surface, contre la circonférence interne du tube en acier (1).

2. Utilisation selon la revendication 1, **caractérisée en ce que** le corps de formage est utilisé pour la soudure de la paroi à membrane d'une chaudière à vapeur d'une centrale électrique.
